## Europäisches Patentamt

## European Patent Office

## Office européen des brevets

(19)

(11) Veröffentlichungsnummer : **0 050 195**
**B1**

(12) **EUROPÄISCHE PATENTSCHRIFT**

(45) Veröffentlichungstag der Patentschrift :
01.02.89

(21) Anmeldenummer : 81106186.0

(22) Anmeldetag : 07.08.81

(51) Int. Cl.⁴ : **G 01 B   7/02, G 01 B   7/30**

(54) Einrichtung zur Auswahl von Referenzmarken bei inkrementalen Längen- oder Winkelmesseinrichtungen.

(30) Priorität : **18.10.80 DE 3039483**

(43) Veröffentlichungstag der Anmeldung :
**28.04.82 Patentblatt 82/17**

(45) Bekanntmachung des Hinweises auf die Patenterteilung : **01.02.89 Patentblatt 89/05**

(84) Benannte Vertragsstaaten :
**AT CH FR GB IT LI NL SE**

(56) Entgegenhaltungen :
**DE–A– 2 418 909**
**DE–B– 2 540 412**
**DE–C– 2 416 212**

(73) Patentinhaber : **Dr. Johannes Heidenhain GmbH**
**Nansenstrasse 17**
**D-8225 Traunreut (DE)**

(72) Erfinder : **Reichl, Alfred**
**Sonntagshornstrasse 10**
**D-8221 Stein (DE)**

## Beschreibung

Die Erfindung bezieht sich auf eine inkrementale Längen- oder Winkelmeßeinrichtung gemäß dem Oberbegriff das Anspruches 1.

In der DE-B- 25 40 412 ist beschrieben, daß entlang einer Inkrementalteilung eine Reihe von Referenzmarken in zueinander festgelegten Abständen angebracht ist. Mit am Maßstab oder in seiner unmittelbaren Nähe angeordneten Schaltmitteln (beispielsweise Magnete und Reedschalter) können aus der Reihe der Referenzmarken eine oder mehrere ausgewählt und zur Wirkung gebracht werden. Dazu müssen gemäß dieser Druckschrift die als Identifizierungsmerkmale vorgesehenen Magnete entlang der Inkrementalteilung verschoben werden, um der ausgewählten Referenzmarke jeweils einen Magneten zuzuordnen. Mit den auf diese Weise ausgewählten Referenzmarken können die verschiedensten Steuerungsvorgänge im Zähler ausgelöst werden.

Ferner sind Einrichtungen zur Auswertung aller festen Positionen zugeordneten codierten Referenzmarken bekannt und beschrieben z. B. in der DE-PS 24 16 212 und DE-OS 24 18 909. Diese Positionen sind den Referenzmarken in verschlüsselter Form als Identifizierungsmerkmale aufgeprägt, so daß während des Meßvorganges die Referenzmarken abgefragt werden, und der Zählerstand bei jeder der Referenzmarken gegebenenfalls auf den Zahlenwert der zur jeweiligen Referenzmarke gehörigen Position gestellt wird.

Der Erfindung liegt die Aufgabe zugrunde, eine Einrichtung zur Auswahl von Referenzmarken bei inkrementalen Meßeinrichtungen weiter zu verbessern, und die Auswahl von Referenzmarken einfacher und sicherer zu machen.

Erfindungsgemäß wird diese Aufgabe durch die Merkmale des Anspruches 1 gelöst.

Die Vorteile der Erfindung liegen im wesentlichen darin, daß die Auswahl der Referenzmarken vom Bedienungspult aus vorgenommen werden kann, und keine mechanischen Manipulationen an dem Maßwertgeber erfolgen müssen. Die erforderlichen Identifizierungsmerkmale (Codespuren) lassen sich ohne großen Mehraufwand bereits bei der Herstellung der Teilung auf der Maßverkörperung aufbringen. Da bei heutigen Meßeinrichtungen im allgemeinen die Auswerteeinrichtung bereits mit Mikrocomputer, Speichern und Schaltpult ausgestattet ist, erfordern die gemäß der Erfindung erforderlichen elektronischen Bauelemente ebenfalls kaum Mehraufwand.

Durch das Betreiben der erfindungsgemäßen Einrichtung gemäß den abhängigen Ansprüche ergeben sich weitere Vorteile.

Anhand der Zeichnungen soll die Erfindung noch näher erläutert werden.

Es zeigt

Figur 1 eine schematische Darstellung einer Meßeinrichtung,

Figur 2 eine weitere schematische Darstellung einer Meßeinrichtung,

Figur 3 die Draufsicht auf eine Maßverkörperung und das Abtastfeld einer Abtasteinrichtung.

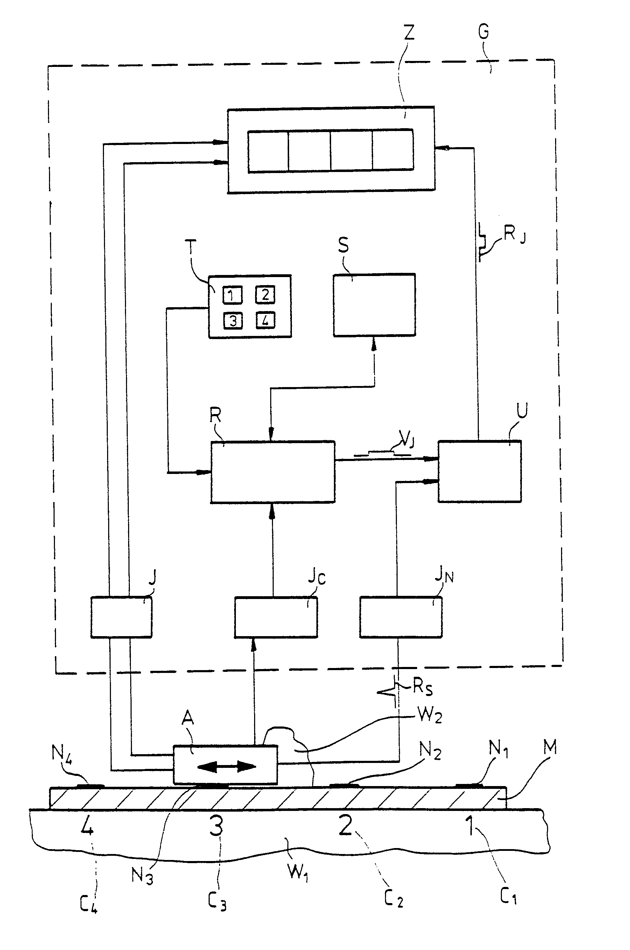

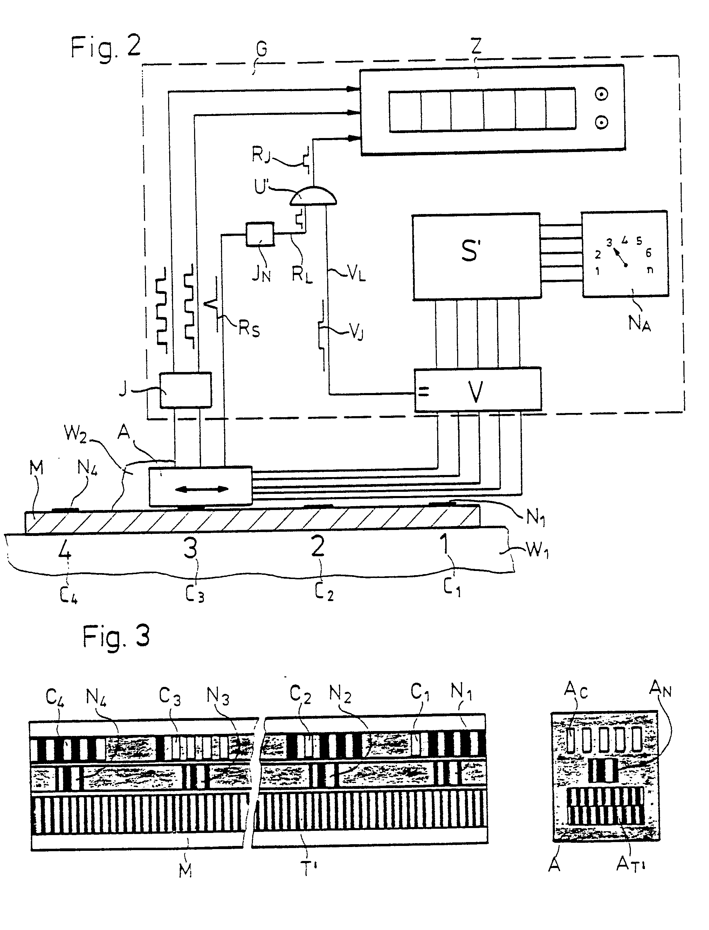

In Figur 1 ist dargestellt, daß eine Maßverkörperung M am Bett $W_1$ einer Werkzeugmaschine fest angebracht ist. Eine am Schlitten $W_2$ der Werkzeugmaschine angeordnete Abtasteinrichtung A bewegt sich bei Relativbewegungen von Bett $W_1$ und Schlitten $W_2$ entlang der Maßverkörperung M und tastet die auf ihr angebrachten Markierungen ab. Diese Markierungen und die Abtasteinrichtung A sind in Figur 3 näher bezeichnet. Mit T' ist die Gitterteilung der inkrementalen Meßeinrichtung bezeichnet, die in bekannter Weise durch die Abtasteinrichtung A mittels Abtastfeld $A_T$, abgelesen wird. Das Abtastfeld $A_T$, besteht aus zwei Teilfeldern, die gegeneinander um 1/4 der Teilungsperiode versetzt sind. Dadurch werden bei der Teilungsablesung zwei zueinander um 90° phasenverschobene Abtastsignale erzeugt, die die Richtungserkennung der Relativbewegung der zueinander beweglichen Bauteile $W_1$ und $W_2$ ermöglichen. Neben der Inkrementalteilung T' befinden sich auf der Maßverkörperung M eine Reihe von Referenzmarken $N_1$, $N_2$, $N_3$, $N_4$, deren Abstände zueinander festgelegt sind. Jede dieser Referenzmarken ist mit speziellen codierten Markierungen $C_1$, $C_2$, $C_3$, $C_4$ versehen (im Ausführungsbeispiel verschlüsselt die Zahl 1, 2, 3 und 4), die die jeweilige Referenzmarke $N_{1..4}$ identifizieren. In der Abtasteinrichtung A sind neben dem Abtastfeld $A_T$, für die Teilung T' noch Abtastfelder $A_N$ und $A_C$ vorgesehen, die jeweils die Referenzmarkenspur und die Identifizierungsmerkmalsspur abtasten.

Bei Relativbewegungen zwischen den Maschinenbauteilen $W_1$ und $W_2$ werden in der Abtasteinrichtung A Meßsignale erzeugt, die einer Impulsformerstufe J zugeführt werden. Die Impulse steuern einen Vorwärts-Rückwärtszähler Z an, der die Position des einen Bauteils $W_1$ in Bezug auf das zweite Bauteil $W_2$ anzeigt. Jeweils beim Überfahren einer Referenzmarke $N_{1..4}$ wird in der Abtasteinrichtung A ferner ein Impuls $R_S$ erzeugt, einer weiteren Impulsformerstufe $J_N$ zugeführt und von dort aus an den Eingang einer elektronischen Baueinheit U gelegt.

Während des Überstreichens der Referenzmarken $N_{1..4}$ wird von dem Abtastfeld $A_C$ jeweils das der Referenzmarke $N_{1..4}$ zugeordnete Identifizierungsmerkmal $C_{1..4}$ abgetastet und die daraus gewonnene Information einer Aufbereitungsstufe $J_C$ zugeleitet. Anschließend werden diese Informationen in Form von Daten in einen Digitalrechner R eingelesen.

Eine Eingabebaueinheit in Form einer Tastatur T wirkt auf den Digitalrechner R ein. Im Zusammenwirken mit dem Digitalrechner R können über die Tastatur T Informationen in Form von Daten in einen elektronischen Datenspeicher S eingespeichert werden. Diese einzuspeichernden Informationen entsprechen dem Informationsgehalt von Identifizierungsmerkmalen $C_{1..n}$ derjenigen Referenzmarken $N_{1..4}$, die aus der Reihe von

Referenzmarken $N_{1..4}$ ausgewählt werden sollen.

Der Digitalrechner R ist so programmiert, daß er jede durch Abtastung der Identifizierungsmerkmale $C_{1..4}$ gewonnene Information mit dem Speicherinhalt vergleicht. Da im Datenspeicher S nur die Informationen der ausgewählten Referenzmarken $N_{1..4}$ bzw. ihrer Identifizierungsmerkmale $C_{1..4}$ enthalten sind, können nur diese Informationen aus dem Datenspeicher S abgefragt werden. Ergibt diese Untersuchung auf Gleichheit ein positives Ergebnis, so liefert der Digitalrechner R ein Signal, das in eine elektronische Baueinheit U eingespeist wird.

Die elektronische Baueinheit U kann eine logische Verknüpfungsschaltung z. B. ein Und-Tor sein, so daß sie nur einen Referenzimpuls $R_J$ an die Auswerteeinrichtung Z liefert, wenn an ihren beiden Eingängen gleichzeitig ein Signal anliegt.

Der Referenzimpuls $R_J$ kommt also nur zur Wirkung, wenn durch Abtastung der Referenzmarke $N_{1..4}$ ein Impuls erzeugt wird, und durch Vergleich von Informationen aus abgetasteten Identifizierungsmerkmalen $C_{1..4}$ und abgespeicherten Informationen ein Signal $V_J$ erzeugt wird, und sowohl der Impuls $R_S$ als auch das Signal $V_J$ gleichzeitig an der elektronischen Baueinheit U anliegen.

Auf diese Weise lassen sich durch einfache Betätigung der Auswahltastatur T beliebige Referenzmarken $N_{1..4}$ aus der Reihe von Referenzmarken auswählen.

Es ist für den Fachmann selbstverständlich, daß er die Erfindung auch so ausgestalten kann, daß Referenzimpulse nur zur Wirkung kommen, wenn ein Informationsvergleich Ungleichheit ergibt. Diese relativ einfache Maßnahme ist beispielsweise dann sinnvoll, wenn aus einer Reihe von Referenzmarken sehr viele ausgewählt werden sollen. In diesem Fall werden die Informationen in den Datenspeicher S eingespeichert, die den Identifizierungsmerkmalen der nicht gewünschten Referenzmarken entsprechen. Nur wenn der vorbeschriebene Informationsvergleich Gleichheit ergibt, wird der Referenzimpuls unterdrückt, bei Ungleichheit kommen die Referenzimpulse zur Wirkung.

Eine weitere Einrichtung mit ähnlichem Grundaufbau ist in Figur 2 beschrieben.

Während des Überstreichens der Referenzmarke $N_{1..4}$ wird von dem Abtastfeld $A_C$ jeweils das der Referenzmarke $N_{1..4}$ zugeordnete Identifizierungsmerkmal $C_{1..4}$ abgetastet und die daraus resultierende Information - beispielsweise in Form einer Kombination von Binärsignalen - in einen Komparator V eingespeist.

An weiteren Eingängen des Komparators V ist ein elektronischer Speicher S' (z. B. RAM) angeschlossen, der sämtliche Identifizierungsmerkmale der auftretenden Referenzmarken $N_{1..4}$ als Kombination von Binärsignalen gespeichert enthält. An diesen Speicher S ist eine Auswahleinrichtung $N_A$ angeschlossen, mit der eine oder mehrere Referenzmarken $N_{1..4}$ zur Auswertung ausgewählt werden können. Die Auswahleinrichtung $N_A$ kann ein Drehschalter oder eine Tastatur sein. Wird als Auswahleinrichtung $N_A$ ein spezieller Codierschalter verwendet, so kann der elektronische Speicher S entfallen, da die Codierung der Identifizierungsmerkmale $C_{1..4}$ und der Code des Codierschalters übereinstimmen.

Soll beispielsweise die Referenzmarke $N_3$ ausgewählt werden, so werden aus dem Speicher S' die Identifizierungsmerkmale für die Referenzmarke $N_3$ ausgelesen und in binärer Form in den Komparator V eingespeist. Wird nun die Abtasteinrichtung A entlang der Inkrementalteilung T' verfahren, so wird beim Überstreichen der Referenzmarke $N_3$ ein Impuls $R_S$ erzeugt und in der vorbeschriebenen Weise an einen Eingang des logischen Verknüpfungsgliedes U' gelegt. Gleichzeitig werden die codierten Identifizierungsmerkmale abgetastet und die dem Code entsprechende Kombination von Binärsignalen über einen zweiten Eingang in den Komparator V eingespeist. Der Komparator V vergleicht die Signalkombinationen und liefert bei Gleichheit einen Impuls $V_J$ an den zweiten Eingang des logischen Verknüpfungsgliedes U'.

Nur bei gleichzeitigem Anliegen eines Impulses $R_S$ von der Referenzmarke $N_3$ und eines Impulses $V_J$ aufgrund der Gleichheitsbestätigung der Identifizierungsmerkmale aus abgelesenem und gespeichertem Code gelangt ein Referenzimpuls $R_J$ aus dem Verknüpfungsglied U' in die Auswerteeinrichtung Z und kann dort beliebige Steuerbefehle auslösen, zum Beispiel den Vorwärts- Rückwärtszähler (Z) auf den Wert « Null » stellen.

Beim Überstreichen anderer als ausgewählter Referenzmarken kann der Komparator V keinen Impuls $V_J$ liefern, da die Koinzidenz von abgelesenen und von aus dem Speicher S' ausgelesenen Identifizierungsmerkmalen nicht gegeben ist.

Eine besonders einfache und sichere Auswahl einer Referenzmarke $N_{1..4}$ aus der Reihe der Referenzmarken kann mit den vorbeschriebenen Einrichtungen erfolgen, wenn am Bett $W_1$ der Werkzeugmaschine die ungefähre Lage einer Referenzmarke $N_{1..4}$ gekennzeichnet und der jeweiligen Referenzmarke $N_{1..4}$ entsprechend beziffert ist. Am Bett $W_1$ der Werkzeugmaschine sind hier die der zugehörigen Codeinformation entsprechenden Ziffern 1, 2, 3 und 4 angebracht, was die Bedienungsperson auch aus grösserer Entfernung noch erkennen kann. In gleicher Weise ist an der Auswahleinrichtung T bzw. $N_A$ eine Bezifferung 1, 2, 3, 4 usw. angebracht.

Die Kennzeichnung der Referenzmarken kann selbstverständlich auch durch die Anbringung von Positionsbezeichnungen erfolgen. So kann z. B. die Referenzmarke die 300 mm vom Nullpunkt der Meßeinrichtung angebracht ist die Kennzeichnung « 300 » tragen, in Übereinstimmung mit der Kennzeichnung an der Auswahleinrichtung T bzw. $N_A$. Das zugehörige codierte Teilungsfeld an der Referenzmarke enthält in diesem Fall zweckmäßig verschlüsselt die Zahl « 300 ».

Ebenso ist die Kennzeichnung durch paarweise Farbmarkierungen möglich.

Die Anzeige der Kennzeichnung der Referenzmarken kann ferner durch alphanumerische Anzeigen in der Auswerteeinrichtung Z erfolgen.

Es empfiehlt sich, die vorbeschriebenen Einrichtungen in einem Gehäuse G am Steuerpult der Maschine unterzubringen, so daß die Bedienung der Auswahleinrichtung in bequemer Weise für die Bedienungsperson möglich ist. Das Steuerpult kann auch Bestandteil einer numerischen Steuerung sein.

## Patentansprüche

1. Inkrementale Längen- oder Winkelmeßeinrichtung mit einer Anordnung zur Auswahl von Referenzmarken aus einer Vielzahl von Referenzmarken, die entlang einer Gitterteilung angeordnet sind, bei der Referenzmarken durch Lageinformationen abtastbarer Merkmale identifizierbar sind, gekennzeichnet durch die Vereinigung folgender Merkmale :

a) eine Abtasteinrichtung (A) für Identifizierungsmerkmale ($C_{1...n}$) ist an ein Vergleichsglied (V, R) angeschlossen, in das jede durch Abtastung der Identifizierungsmerkmale ($C_{1...n}$) jeweils an der zugehörigen Referenzmarke ($N_{1...n}$) gewonnene Lageinformation eingespeist ist ;

b) das Vergleichsglied (V, R) ist ferner an einen Datenspeicher (S, S') angeschlossen, aus dem mittels einer Auswahleinrichtung ($N_A$, T) vorab ausgewählte, dem jeweiligen Identifizierungsmerkmal ($C_{1...n}$) der zugehörigen, auszuwählenden Referenzmarke ($N_{1...n}$) entsprechende, referenzmarkenspezifische Informationen in das Vergleichsglied (V, R) eingespeist sind ;

c) das Vergleichsglied (V, R) ist an eine Verknüpfungsschaltung (U, U') angeschlossen, in die das Vergleichsergebnis und jeder durch Abtastung einer Referenzmarke ($N_{1...n}$) gewonnene Impuls ($R_S$) eingespeist ist ;

d) die Verknüpfungsschaltung (U, U') ist an eine Auswerteeinrichtung (Z) angeschlossen, in die in Abhängigkeit von den Verknüpfungsbedingungen ein Referenzimpuls ($R_J$) zu Steuerungszwecken eingespeist ist.

2. Meßeinrichtung nach Anspruch 1, dadurch gekennzeichnet, daß als Vergleichsglied ein Digitalrechner (R) vorgesehen ist, der Zugriff zu einem elektronischen Datenspeicher (S) für Informationen hat, die den Identifizierungsmerkmalen der zugehörigen Referenzmarken ($N_{1...n}$) entsprechen, daß ferner die Auswahleinrichtung (T) zur Auswahl von Referenzmarken ($N_{1...n}$) mit dem Digitalrechner (R) verbunden ist, mit deren Hilfe eine beliebige Einspeicherung von referenzmarkenspezifischen Informationen in den Datenspeicher (S) erfolgt.

3. Meßeinrichtung nach Anspruch 1, dadurch gekennzeichnet, daß den Referenzmarken ($N_{1...n}$) codierte Teilungsfelder als Identifizierungsmerkmale ($C_{1...n}$) zugeordnet sind.

4. Meßeinrichtung nach Anspruch 3, dadurch gekennzeichnet, daß die Identifizierungsmerkmale ($C_{1...n}$) zusätzlich in Dezimalziffern (1, 2, 3, 4) in der Nähe der Referenzmarken ($N_{1...n}$) und an der Auswahleinrichtung (T, $N_A$) angebracht sind.

5. Meßeinrichtung nach Anspruch 3, dadurch gekennzeichnet, daß die Identifizierungsmerkmale ($C_{1...n}$) aus der Lage der Referenzmarken ($N_{1...n}$) zum Nullpunkt der Meßeinrichtung abgeleitet sind, und diese Positionen zusätzlich als Dezimalzahlen in der Nähe der Referenzmarken ($N_{1...n}$) und an der Auswahleinrichtung (T, $N_A$) angebracht sind.

6. Meßeinrichtung nach Anspruch 3, dadurch gekennzeichnet, daß die Identifizierungsmerkmale ($C_{1...n}$) zusätzlich als Farbmarkierungen in der Nähe der Referenzmarken ($N_{1...n}$) und an der Auswahleinrichtung (T, $N_A$) angebracht sind.

7. Meßeinrichtung nach Anspruch 1, dadurch gekennzeichnet, daß der Speicher (S') und die Auswahleinrichtung ($N_A$) durch einen Codierschalter realisiert werden.

8. Meßeinrichtung nach Anspruch 2, dadurch gekennzeichnet, daß der Digitalrechner (R) ein Mikrocomputer ist.

## Claims

1. Incremental length or angle measuring device with an arrangement for selecting reference marks from a plurality of reference marks, which are arranged along a graduation, in which the reference marks are identifiable by positional information of sensible features, characterized by the combination of the following features :

a) a sensing device (A) for identifying features ($C_{1...n}$) is connected to a comparator (V, R), to which each positional information obtained from sensing the identifying features ($C_{1...n}$) each at the corresponding reference mark is fed ;

b) the comparator (V, R) is further connected to a data store (S, S') from which is fed to the comparator (V, R) reference mark specific information corresponding to the respective identifying features ($C_{1...n}$) of the associated reference marks ($N_{1...n}$) previously selected by means of a selector device ($N_A$, T) ;

c) the comparator (V, R) is connected to a combining circuit (U, U'), to which is fed the comparison results and each pulse ($R_S$) obtained by sensing a reference mark ($N_{1...n}$) ;

d) the combining circuit (U, U') is connected to an evaluation device (Z) to which is fed for control purposes a reference pulse ($R_J$), in dependence upon the combining conditions.

2. Measuring device according to claim 1, characterized in that a digital computer (R) is provided as comparator, which has access to an electronic data store (S) for information which corresponds to the identifying features of the associated reference marks ($N_{1...n}$), further in that the selector device (T) for selection of reference marks ($N_{1...n}$) is connected to the digital computer, with whose aid any desired storage of reference mark specific information is effected in the data store (S).

3. Measuring device according to claim 1, characterized in that coded graduation fields are associated with the reference marks ($N_{1...n}$) as

identifying features ($C_{1...n}$).

4. Measuring device according to claim 3, characterized in that the identifying features ($C_{1...n}$) are additionally provided in decimal numbers (1, 2, 3, 4) in the vicinity of the reference marks ($N_{1...n}$) and on the selector device (T, $N_A$).

5. Measuring device according to claim 3, characterized in that the identifying features ($C_{1...n}$) are derived from the position of the reference marks ($N_{1...n}$) relative to the null point of the measuring device and these positions are additionally provided as decimal numbers in the vicinity of the reference marks ($N_{1...n}$) and on the selector device (T, $N_A$).

6. Measuring device according to claim 3, characterized in that the identifying features ($C_{1...n}$) are additionally provided as coloured markings in the vicinity of the reference marks ($N_{1...n}$) and on the selector device (T, $N_A$).

7. Measuring device according to claim 1, characterized in that the store (S') and the selector device ($N_A$) are implemented by a coding switch.

8. Measuring device according to claim 2, characterized in that the digital computer (R) is a micro-computer.

## Revendications

1. Dispositif incrémental de mesure de longueurs ou d'angles avec un agencement pour la sélection de marques de référence parmi une pluralité de marques de référence qui sont disposées le long d'une division de grille, pour lesquelles des marques de référence sont identifiables par des informations de position de caractéristiques analysables, caractérisé par l'association des signes distinctifs suivants :

a) un dispositif d'analyse (A) pour attributs d'identification ($C_{1...n}$) est connecté à un organe comparateur (V, R) dans lequel chaque information de position, obtenue par analyse des attributs d'identification ($C_{1...n}$), est chaque fois alimentée à la marque de référence s'y rapportant ($N_{1...n}$) ;

b) l'organe comparateur (V, R) est en outre connecté à une mémoire de données (S, S') à partir de laquelle, sélectionnée en premier lieu, au moyen d'un dispositif de sélection ($N_A$, T), à chaque attribut d'identification ($C_{1...n}$) de la marque de référence ($N_{1...n}$) s'y rapportant à sélectionner, des informations correspondantes, spécifiques aux marques de référence, sont amenées dans l'organe comparateur (V, R) ;

c) l'organe comparateur (V, R) est connecté à un circuit combinatoire (U, U') dans lequel est amené le résultat de la comparaison et toute impulsion ($R_S$) obtenue par analyse d'une marque de référence ($N_{1...n}$).

d) le circuit combinatoire (U, U') est connecté à un dispositif d'évaluation (Z) dans lequel est amenée, en fonction des conditions de combinaison, une impulsion de référence ($R_J$) à des fins de commande.

2. Dispositif de mesure selon la revendication 1, caractérisé par le fait qu'a été prévu, comme organe comparateur, un calculateur numérique R ayant accès à une mémoire électronique de données (S) pour des informations qui correspondent aux attributs d'identification des marques de référence (T) est, pour la sélection de marques de référence ($N_{1...n}$), relié au calculateur numérique (R), à l'aide duquel a lieu une mémorisation quelconque d'informations spécifiques aux marques de référence dans la mémoire de données (S).

3. Dispositif de mesure selon la revendication 1, caractérisé par le fait qu'aux marques de référence ($N_{1...n}$), des champs de graduations codés sont attribués comme attributs d'identification ($C_{1...n}$).

4. Dispositif de mesure selon la revendication 3, caractérisé par le fait que les attributs d'identification ($C_{1...n}$) sont en outre posés en chiffres décimaux (1, 2, 3, 4) au voisinage des marques de référence ($N_{1...n}$) et au dispositif de sélection (T, $N_A$).

5. Dispositif de mesure selon la revendication 3, caractérisé par le fait que les attributs d'identification ($C_{1...n}$) sont dérivés de la position des marques de référence ($N_{1...n}$) au point zéro du dispositif de mesure, et que ces positions sont en outre placées comme nombreux décimaux au voisinage des marques de référence ($N_{1...n}$) et au dispositif de sélection (T, $N_A$).

6. Dispositif de mesure selon la revendication 3, caractérisé par le fait que les attributs d'identification ($C_{1...n}$) sont en outre placés, comme marquages de couleur, au voisinage des marques de référence ($N_{1...n}$) et au dispositif de sélection (T, $N_A$).

7. Dispositif de mesure selon la revendication 1, caractérisé par le fait que la mémoire (S') et le dispositif de sélection ($N_A$) sont réalisés par un commutateur de codage.

8. Dispositif de mesure selon la revendication 2, caractérisé par le fait que le calculateur numérique (R) est un micro-ordinateur.

EP 0 050 195 B1

1

Fig. 2

Fig. 3